# EUROPEAN PATENT APPLICATION

(11) **EP 4 056 442 A1**
(43) Date of publication of application: **14.09.2022**
(21) Application number: 22155330.8
(22) Date of filing: 07.02.2022
(51) Int. Cl.: B60W 50/06, B60W 50/14, G01M 17/007

(54) **DRIVING DIAGNOSIS DEVICE AND DRIVING DIAGNOSIS METHOD**

(30) Priority: 10.03.2021 JP 2021038778
(71) Applicant: TOYOTA JIDOSHA KABUSHIKI KAISHA, Toyota-shi, Aichi-ken, 471-8571 (JP)
(72) Inventor: MANABE, Shuhei, Toyota-shi (JP)
(74) Representative: J A Kemp LLP

(57) **Abstract**

A driving diagnosis device (10) includes a detection value recorder (12D) configured to acquire and record a detection value detected by a detector (32, 33, 35, 37) provided in a vehicle (30) from a detection value acquirer (38) for acquiring the detection value, the detection value being a physical quantity that changes based on at least one of traveling, steering, and braking of the vehicle (30) or a physical quantity that changes by operation of a predetermined operating member, an information extractor (142) configured to extract a specific detection value that is the detection value specified from the detection value recorder (12D), a KPI acquirer (143) configured to acquire a key performance indicator based on the specific detection value, and a score calculator (144) configured to calculate a driving operation score based on the key performance indicator.

Selected drawing: FIG. 2

## Description

### BACKGROUND OF THE INVENTION

### 1. Field of the Invention

The invention relates to a driving diagnosis device and a driving diagnosis method.

### 2. Description of Related Art

Japanese Patent No. 3593502 (JP 3593502 B) and Japanese Patent No. 6648304 (JP 6648304 B) disclose a driving diagnosis device that performs a calculation based on a detection value, which is a physical quantity that changes based on at least one of traveling, steering, and braking of a vehicle, and acquires a driving diagnosis result.

### SUMMARY OF THE INVENTION

The driving diagnosis device of JP 3593502 B and JP 6648304 B has room for improvement in reducing a calculation load.

The invention has been made in consideration of the above facts, and provides a driving diagnosis device and a driving diagnosis method having a small calculation load.

A first aspect of the invention relates to a driving diagnosis device. The driving diagnosis device includes a detection value recorder configured to acquire and record a detection value detected by a detector provided in a vehicle from a detection value acquirer for acquiring the detection value, the detection value being a physical quantity that changes based on at least one of traveling, steering, and braking of the vehicle or a physical quantity that changes by operation of a predetermined operating member, an information extractor configured to extract a specific detection value that is the detection value specified from the detection value recorder, a key performance indicator (KPI) acquirer configured to acquire a key performance indicator based on the specific detection value, and a score calculator configured to calculate a driving operation score based on the key performance indicator.

In the first aspect, the detection value recorder acquires and records a detection value that is a physical quantity that changes based on at least one of traveling, steering, and braking of the vehicle or a physical quantity that changes by operation of a predetermined operating member, and is detected by a detector provided in a vehicle. Further, the information extractor extracts a specific detection value that is the detection value specified from the detection value recorder. Further, the KPI acquirer calculates a key performance indicator based on the extracted specific detection value. Further, the score calculator calculates a driving operation score based on the key performance indicator.

The KPI acquirer performs a calculation using merely a specific detection value among the detection values. Therefore, the calculation load of the KPI acquirer is small compared to a case where the calculation is performed using all the detection values. Therefore, in the first aspect, the calculation load is small.

In the first aspect, the detection value acquirer and the detection value recorder may be connected to each other via the Internet.

According to the first aspect, the detection value acquirer and the detection value recorder are connected to each other via the Internet. Therefore, for example, the driving diagnosis device including the detection value recorder can be constructed as a cloud computing system.

In the first aspect, the key performance indicator may include the specific detection value and a calculation value using the specific detection value.

According to the first aspect, the KPI acquirer acquires the key performance indicator as the specific detection value and the calculation value using the specific detection value. Therefore, driving diagnosis using the key performance indicator is enabled.

In the first aspect, the score calculator may calculate the driving operation score based on a plurality of the key performance indicators.

According to the first aspect, the score calculator calculates the driving operation score based on the key performance indicators. Therefore, the driving diagnosis using the driving operation score is enabled.

In the first aspect, the driving diagnosis device may further include an event specifier configured to specify an event that is a specific behavior that has occurred in the vehicle based on the detection value.

According to the first aspect, an event, which is a specific behavior that has occurred in the vehicle, is specified based on the detection value. Therefore, driving diagnosis using the event becomes is enabled.

In the first aspect, the driving diagnosis device may further include a database unit configured to store at least one of the driving operation score and information about the event specified by the event specifier and to be connected to the Internet.

According to the first aspect, at least one of the driving operation score and the information about the event specified by the event specifier is stored in the database unit connected to the Internet. Therefore, a person who can access the database unit can develop an application that uses the above-mentioned information.

A second aspect of the invention relates to a driving diagnosis method. The driving diagnosis method includes acquiring a detection value detected by a detector provided in a vehicle from a detection value acquirer for acquiring the detection value, the detection value being a physical quantity that changes based on at least one of traveling, steering, and braking of the vehicle or a physical quantity that changes by operation of a predetermined operating member, extracting a specific detection value that is the detection value specified from the detection value, acquiring a key performance indicator based on the extracted specific detection value, and calculating a driving operation score based on the key performance indicator.

As described above, the driving diagnosis device and the driving diagnosis method according to the aspects of the invention have an excellent effect that the calculation load is small.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a diagram illustrating a vehicle capable of transmitting a detection value to a driving diagnosis device according to an embodiment;
FIG. 2 is a diagram illustrating the driving diagnosis device, a vehicle, and a mobile terminal according to the embodiment;
FIG. 3 is a control block diagram of a first server of the driving diagnosis device illustrated in FIG. 2;
FIG. 4 is a functional block diagram of a second server illustrated in FIG. 2;
FIG. 5 is a functional block diagram of a third server of the driving diagnosis device illustrated in FIG. 2;
FIG. 6 is a functional block diagram of a fourth server of the driving diagnosis device illustrated in FIG. 2;
FIG. 7 is a functional block diagram of the mobile terminal illustrated in FIG. 2;
FIG. 8 is a diagram showing a scene list;
FIG. 9 is a diagram showing an event list;
FIG. 10 is a flowchart illustrating a process executed by the second server;
FIG. 11 is a flowchart illustrating a process executed by the fourth server;
FIG. 12 is a flowchart illustrating a process executed by the mobile terminal illustrated in FIG. 2;
FIG. 13 is a diagram illustrating an image displayed on a display of a mobile terminal; and
FIG. 14 is a diagram illustrating an image displayed on a display of a mobile terminal.

### DETAILED DESCRIPTION OF EMBODIMENTS

Hereinafter, a driving diagnosis device 10 and a driving diagnosis method according to embodiments of the invention will be described with reference to the drawings.

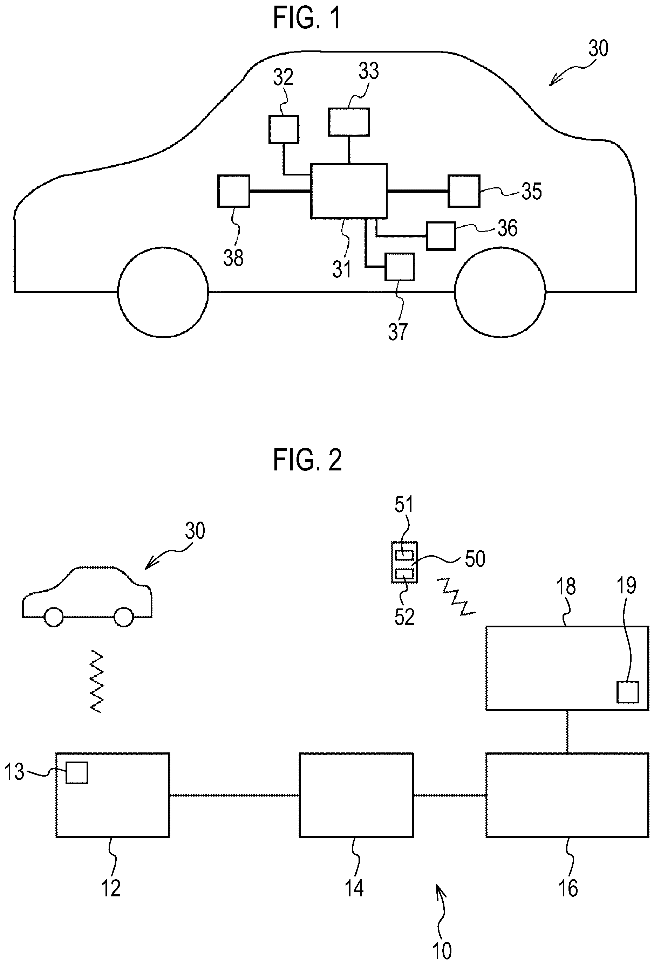

As illustrated in FIG. 1, a vehicle 30 capable of data communication with the driving diagnosis device 10 via a network includes an electronic control unit (ECU) 31, a wheel speed sensor 32, an accelerator operation amount sensor 33, a steering angle sensor 35, a camera 36, and a global positioning system (GPS) receiver 37, and a wireless communication device (detection value acquirer) 38. A vehicle ID is attached to the vehicle 30 capable of receiving the diagnosis by the driving diagnosis device 10. In the embodiment, at least one vehicle 30 capable of receiving the diagnosis by the driving diagnosis device 10 is manufactured by an entity A. The wheel speed sensor 32, the accelerator operation amount sensor 33, the steering angle sensor 35, the camera 36, the GPS receiver 37, and the wireless communication device 38 are connected to the ECU 31. The ECU 31 includes a CPU, ROM, RAM, storage, communication interface (I/F), and input/output I/F. The CPU, ROM, RAM, storage, communication I/F, and input/output I/F of the ECU 31 are connected to be communicable with each other via a bus. The above network includes a communication network of a telecommunications carrier and an Internet network. The wireless communication device 38 of the vehicle 30 and the mobile terminal 50 (operation terminal) to be described later perform data communication via the network.

The wheel speed sensor 32 (detector), the accelerator operation amount sensor 33 (detector), the steering angle sensor 35 (detector), and the GPS receiver 37 (detector) repeatedly detect a physical quantity that changes based on at least one of traveling, steering, and braking of the vehicle 30 or a physical quantity that changes by operation of a predetermined operating member (for example, a shift lever), every time a predetermined time elapses. The vehicle 30 is provided with four wheel speed sensors 32. The wheel speed sensor 32 detects the wheel speeds of the four wheels of the vehicle 30, respectively. The accelerator operation amount sensor 33 detects the accelerator operation amount. The steering angle sensor 35 detects the steering angle of the steering wheel. The GPS receiver 37 acquires information about a position where the vehicle 30 is traveling (hereinafter, referred to as "position information") by receiving GPS signals transmitted from GPS satellites. The detection values detected by the wheel speed sensor 32, the accelerator operation amount sensor 33, the steering angle sensor 35, and the GPS receiver 37 are transmitted to the ECU 31 via a controller area network (CAN) provided in the vehicle 30 and stored in a storage of the ECU 31. Further, the camera 36 repeatedly captures a subject located outside the vehicle 30 every time a predetermined time elapses. Image data acquired by the camera 36 is transmitted to the ECU 31 and stored in the storage via the network provided in the vehicle 30.

As illustrated in FIG. 2, the driving diagnosis device 10 includes a first server 12, a second server 14, a third server (database unit) 16, and a fourth server 18. For example, the first server 12, the second server 14, the third server 16, and the fourth server 18 are disposed in one building. The first server 12 and the fourth server 18 are connected to the above network. The first server 12 and the second server 14 are connected by a local area network (LAN). The second server 14 and the third server 16 are connected by a LAN. The third server 16 and the fourth server 18 are connected by a LAN. That is, the driving diagnosis device 10 is constructed as a cloud computing system. In the embodiment, the first server 12, the second server 14, and the third server 16 are managed by the entity A. On the other hand, the fourth server 18 is managed by an entity B.

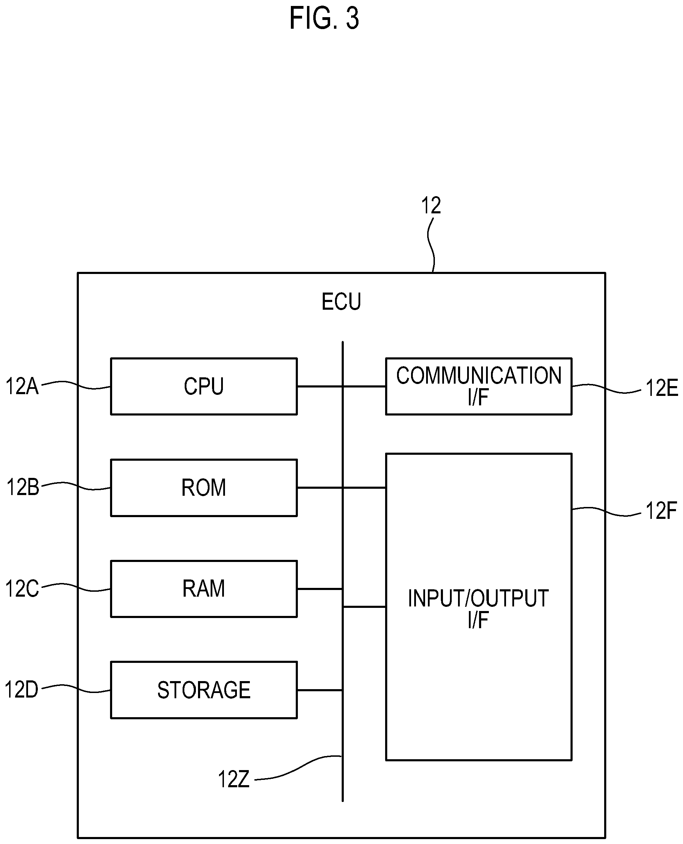

As illustrated in FIG. 3, the first server 12 includes a central processing unit (CPU)(processor) 12A, a read only memory (ROM) 12B, a random access memory (RAM) 12C, a storage (detection value recorder) 12D, and a communication interface (I/F) 12E, and an input/output I/F 12F. The CPU 12A, ROM 12B, RAM 12C, storage 12D, communication I/F 12E, and input/output I/F 12F are connected to be communicable with each other via a bus 12Z. The first server 12 can acquire information about the date and time from a timer (not illustrated).

The CPU 12A is a central arithmetic processing unit that executes various programs and controls each part. That is, the CPU 12A reads a program from the ROM 12B or the storage 12D, and executes the program using the RAM 12C as a work area. The CPU 12A controls each component and performs various arithmetic processing tasks (information processing) according to the program recorded in the ROM 12B or the storage 12D.

The ROM 12B stores various programs and various data. The RAM 12C temporarily stores a program or data as a work area. The storage 12D may include a storage device such as a hard disk drive (HDD) or a solid state drive (SSD), and stores various programs and various data. The communication I/F12E is an interface for the first server 12 to communicate with other devices. The input/output I/F 12F is an interface for communicating with various devices.

Detection value data that represents the detection values detected by the wheel speed sensor 32, the accelerator operation amount sensor 33, the steering angle sensor 35, and the GPS receiver 37 of the vehicle 30, and image data acquired by the camera 36 are transmitted from the wireless communication device 38 to a transmission and reception part 13 of the first server 12 via the network every time a predetermined time elapses, and the detection value data and the image data are recorded in the storage 12D. All the detection value data and the image data recorded in the storage 12D include information about the vehicle ID, information about the acquired time, and position information acquired by the GPS receiver 37.

Basic configurations of the second server 14, the third server 16, and the fourth server 18 are the same as those of the first server 12.

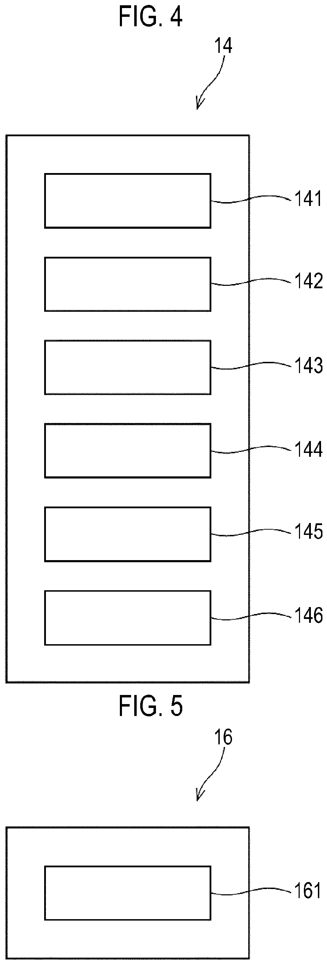

FIG. 4 illustrates an example of a functional configuration of the second server 14 as a block diagram. The second server 14 includes, as a functional configuration, a transmission and reception part 141, a scene extractor (information extractor) 142, a KPI acquirer 143, a score calculator (diagnosis result generator) 144, and an event specifier (diagnosis result generator) 145, and a deleter 146. The transmission and reception part 141, the scene extractor 142, the KPI acquirer 143, the score calculator 144, the event specifier 145, and the deleter 146 are implemented by the CPU of the second server 14 reading and executing the program stored in the ROM.

The transmission and reception part 141 transmits and receives information to and from the first server 12 and the third server 16 via the LAN. The detection value data and the image data recorded in the storage 12D of the first server 12 are transmitted to the transmission and reception part 141 of the second server 14 while being associated with the vehicle ID. The detection value data and the image data transmitted from the first server 12 to the transmission and reception part 141 include a data group acquired during a predetermined data detection time. The data detection time is, for example, 30 minutes. Hereinafter, the data group (detection value data and image data) corresponding to one vehicle ID and acquired during the data detection time will be referred to as a "detection value data group". The detection value data group recorded in the first server 12 is transmitted to the transmission and reception part 141 in order from the oldest acquired time. More specifically, as will be described later, when the detection value data group is deleted from the storage of the second server 14, a detection value data group newer than the detection value data group is transmitted from the first server 12 to the transmission and reception part 141, and the new detection value data group is stored in the storage of the second server 14.

The scene extractor 142 identifies the detection value data group stored in the storage of the second server 14 into data representing a specific detection value and other data. More specifically, the scene extractor 142 treats data needed to acquire a key performance indicator, which will be described later, as the data representing a specific detection value.

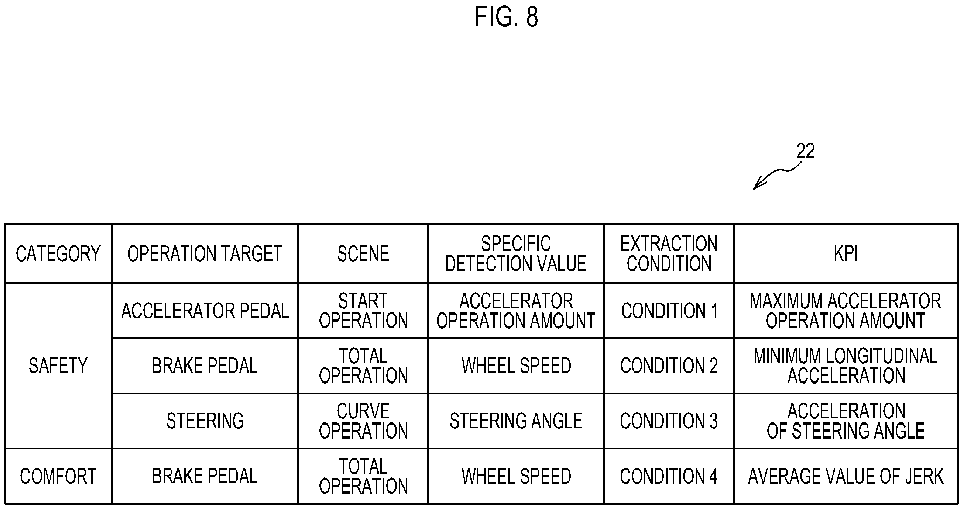

FIG. 8 is a scene list 22 recorded in the ROM of the second server 14. The scene list 22 is defined based on an operation target which is a member operated by a driver of the vehicle 30, an operation content of the operation target, and the like. The largest item categories in the scene list 22 are "safety" and "comfort". Further, the operation targets included in the category "safety" are the accelerator pedal, the brake pedal and the steering. The operation target included in the category "comfort" is the brake pedal. Scenes, specific detection values, and extraction conditions are defined for each operation target.

For example, when the accelerator pedal included in the category "safety" is operated in a state in which a condition 1 is satisfied, the scene extractor 142 determines that "the start operation is being performed using the accelerator pedal." with reference to the scene list 22. The condition 1 is, for example, that the vehicle speed of the vehicle 30 is equal to or higher than a predetermined first threshold value. The vehicle speed of the vehicle 30 is calculated by the scene extractor 142 based on the wheel speed included in the detection value data group stored in the storage of the second server 14 and detected by each wheel speed sensor 32. Further, the scene extractor 142 determines whether or not the condition 1 is satisfied based on the calculated vehicle speed and the first threshold value. When the determination is made that the condition 1 is satisfied, the scene extractor 142 extracts, from the detection value data group stored in the storage, data about the accelerator operation amount detected by the accelerator operation amount sensor 33 in a time period when the condition 1 is satisfied, as data representing a specific detection value.

When the brake pedal included in the category "safety" is operated in a state in which a condition 2 is satisfied, the scene extractor 142 determines that "the total operation is being performed using the brake pedal" with reference to the scene list 22. The condition 2 is, for example, that the vehicle speed of the vehicle 30 is equal to or higher than a predetermined second threshold value. The scene extractor 142 determines whether or not the condition 2 is satisfied based on the calculated vehicle speed and the second threshold value. When the determination is made that the condition 2 is satisfied, the scene extractor 142 extracts, from the detection value data group stored in the storage, data about the wheel speed detected by the wheel speed sensor 32 in a time period when the condition 2 is satisfied, as data representing a specific detection value.

When the steering included in the category "safety" is operated in a state in which a condition 3 is satisfied, the scene extractor 142 determines that "the steering is curved" with reference to the scene list 22. The condition 3 is, for example, that the steering angle (steering amount) of the steering within a predetermined time is equal to or higher than a predetermined third threshold value. The scene extractor 142 determines whether or not the condition 3 is satisfied based on information about the steering angle included in the detection value data group stored in the storage of the second server 14 and detected by the steering angle sensor 35 or a third threshold value. When the determination is made that the condition 3 is satisfied, the scene extractor 142 extracts, from the detection value data group stored in the storage, data about the steering angle detected by the steering angle sensor 35 in a time period when the condition 3 is satisfied, as data representing a specific detection value.

When the brake pedal included in the category "comfort" is operated in a state in which a condition 4 is satisfied, the scene extractor 142 determines that "the total operation is being performed using the brake pedal" with reference to the scene list 22. The condition 4 is, for example, that the vehicle speed of the vehicle 30 is equal to or higher than a predetermined fourth threshold value. The scene extractor 142 determines whether or not the condition 4 is satisfied based on the calculated vehicle speed and the fourth threshold value. When the determination is made that the condition 4 is satisfied, the scene extractor 142 extracts, from the detection value data group stored in the storage, data about the wheel speed detected by the wheel speed sensor 32 in a time period when the condition 4 is satisfied, as data representing a specific detection value.

When any of the extraction conditions is satisfied, the KPI acquirer 143 acquires (calculates) a key performance indicator (KPI) corresponding to the satisfied extraction condition.

For example, when the condition 1 is satisfied, the KPI acquirer 143 acquires, from the data (specific detection value) about the accelerator operation amount acquired by the scene extractor 142, a maximum accelerator operation amount in a time period when the condition 1 is satisfied, as the key performance indicator.

When the condition 2 is satisfied, the KPI acquirer 143 calculates a minimum longitudinal acceleration of the vehicle 30 in a time period when the condition 2 is satisfied as the key performance indicator, based on the data (specific detection value) about the wheel speed acquired by the scene extractor 142. That is, the KPI acquirer 143 acquires a calculation value (differential value) using the wheel speed as a key performance indicator.

When the condition 3 is satisfied, the KPI acquirer 143 calculates an acceleration of the steering angle in a time period when the condition 3 is satisfied as the key performance indicator, based on the data (specific detection value) about the steering angle acquired by the scene extractor 142. That is, the KPI acquirer 143 acquires a calculation value (second differential value) using the steering angle as the key performance indicator.

When the condition 4 is satisfied, the KPI acquirer 143 calculates the average value of longitudinal jerks of the vehicle 30 in a time period when the condition 4 is satisfied as the key performance indicator, based on the data (specific detection value) about the wheel speed acquired by the scene extractor 142. That is, the KPI acquirer 143 acquires a calculation value (second differential value) using the wheel speed as the key performance indicator.

As will be described later, the score calculator 144 calculates a safety score, a comfort score, and a driving operation score based on the calculated key performance indicator.

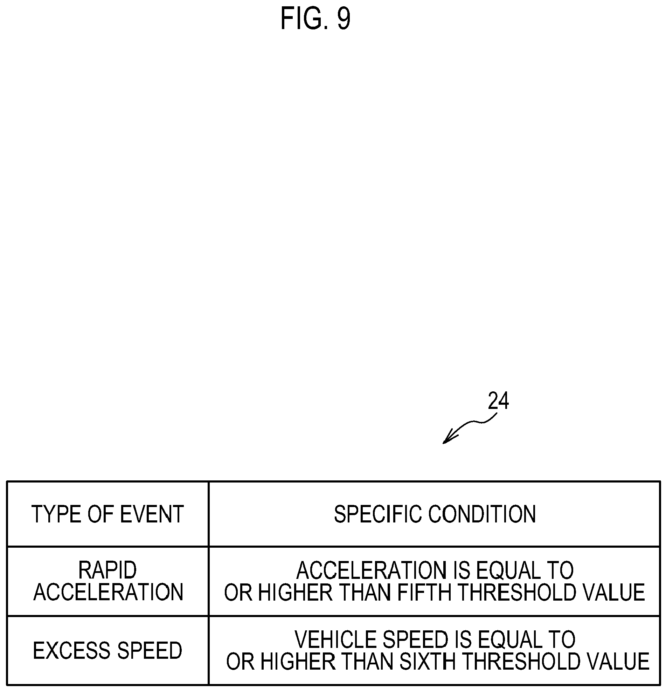

The event specifier 145 specifies an event with reference to the detection value data group stored in the storage of the second server 14 and an event list 24 shown in FIG. 9 and recorded in the ROM of the second server 14. The event is a specific behavior that occurs in the vehicle 30 due to an operation by the driver. The event list 24 defines the type (content) of the event and conditions (specific conditions) to be specified as an event. In the event list 24, "rapid acceleration" and "excess speed" are defined as events.

The event specifier 145 determines whether or not the vehicle 30 has generated an acceleration equal to or higher than a predetermined fifth threshold value based on data about all wheel speeds included in the detection value data group stored in the storage. When the determination is made that the vehicle 30 has traveled at an acceleration equal to or higher than the fifth threshold value, the event specifier 145 specifies the acceleration equal to or higher than the fifth threshold value, the date and time when the acceleration has occurred, and position information on where the acceleration has occurred, as an event.

The event specifier 145 determines whether or not the vehicle 30 has traveled at a vehicle speed equal to or higher than a predetermined sixth threshold value based on data about all wheel speeds included in the detection value data group stored in the storage. When the determination is made that the vehicle 30 has traveled at a vehicle speed equal to or higher than the sixth threshold value, the event specifier 145 specifies the vehicle speed equal to or higher than the sixth threshold value, the date and time when the vehicle speed has occurred, and position information on where the vehicle speed has occurred, as an event.

When the scene extractor 142, the KPI acquirer 143, and the score calculator 144 complete the above processing for one detection value data group recorded in the storage, the transmission and reception part 141 transmits the acquired safety score, comfort score, driving operation score, and the data about the specified event to the third server 16 together with the information about the vehicle ID. The data about the event includes information about the date and time when each of each specified event has occurred, position information, and image data acquired by the camera 36 within a predetermined time including the time when the event has occurred.

When the scene extractor 142, the KPI acquirer 143, and the score calculator 144 complete the above processing for one detection value data group, the deleter 146 deletes the detection value data group from the storage of the second server 14.

The third server 16 receives the data about the safety score, the comfort score, the driving operation score, and the specified event transmitted from the second server 14. As illustrated in FIG. 5, the third server 16 has a transmission and reception part 161 as a functional configuration. The transmission and reception part 161 is implemented by the CPU of the third server 16 reading and executing a program stored in the ROM. The data received by the transmission and reception part 161 are recorded in the storage of the third server 16. Data about the safety score, the comfort score, the driving operation score, and the specified event are sequentially transmitted from the second server 14 to the third server 16, and the third server 16 records all the received data in the storage.

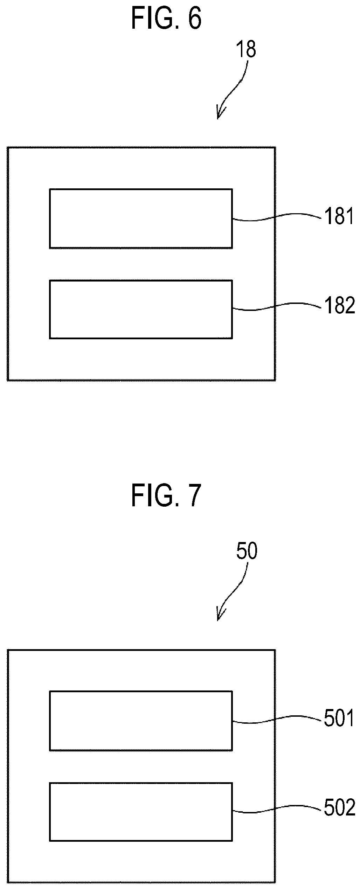

The fourth server 18 functions as at least a web server and a WebApp server. As illustrated in FIG. 6, the fourth server 18 has a transmission and reception controller 181 and a data generator 182 as a functional configuration. The transmission and reception controller 181 and the data generator 182 are implemented by the CPU of the fourth server 18 reading and executing the program stored in the ROM. The transmission and reception controller 181 controls a transmission and reception part 19 of the fourth server 18.

The mobile terminal 50 illustrated in FIG. 2 includes a CPU, ROM, RAM, storage, communication I/F, and input/output I/F. The mobile terminal 50 is, for example, a smartphone or a tablet computer. The CPU, ROM, RAM, storage, communication I/F, and input/output I/F of the mobile terminal 50 are connected to be communicable with each other via a bus. The mobile terminal 50 can acquire information about the date and time from a timer (not illustrated). The mobile terminal 50 is provided with a display 51 having a touch panel. The display 51 is connected to the input/output I/F of the mobile terminal 50. Further, map data is recorded in the storage of the mobile terminal 50. The mobile terminal 50 has a transmission and reception part 52.

FIG. 7 illustrates an example of a functional configuration of the mobile terminal 50 as a block diagram. The mobile terminal 50 has a transmission and reception controller 501 and a display controller 502 as a functional configuration. The transmission and reception controller 501 and the display controller 502 are implemented by the CPU reading and executing a program stored in the ROM. The mobile terminal 50 is owned by, for example, the driver of the vehicle 30 with the vehicle ID. A predetermined driving diagnosis display application is installed on the mobile terminal 50.

The transmission and reception part 52 controlled by the transmission and reception controller 501 transmits and receives data to and from the transmission and reception part 19 of the fourth server 18.

The display controller 502 controls the display 51. That is, the display controller 502 causes the display 51 to display, for example, information received from the transmission and reception part 19 by the transmission and reception part 52 and information input via the touch panel. The information input by the touch panel of the display 51 can be transmitted to the transmission and reception part 19 by the transmission and reception part 52.

### Operation and Effect

Next, the operation and effect of the embodiment will be described.

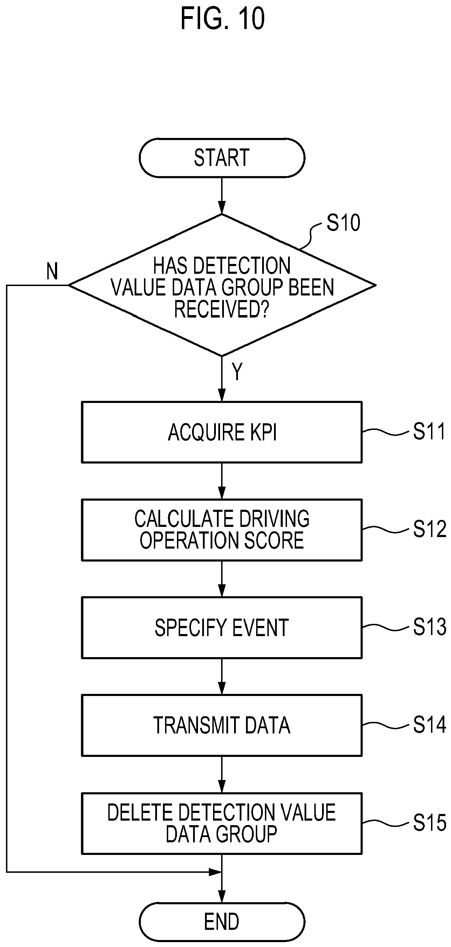

First, a flow of the process performed by the second server 14 will be described with reference to a flowchart of FIG. 10. The second server 14 repeatedly executes the process of the flowchart of FIG. 10 every time a predetermined time elapses.

First, in step S10, the transmission and reception part 141 of the second server 14 determines whether or not the detection value data group has been received from the first server 12. In other words, the transmission and reception part 141 determines whether or not the detection value data group is recorded in the storage of the second server 14.

When the determination in step S10 is affirmative, the second server 14 proceeds to step S11, and the scene extractor 142 extracts data representing a specific detection value satisfying an extraction condition from the detection value data group stored in the storage. Further, the KPI acquirer 143 acquires (calculates) each key performance indicator based on the extracted data representing the specific detection value.

The second server 14 that has completed the operation of step S11 proceeds to step S12, and the score calculator 144 calculates the safety score, the comfort score, and the driving operation score.

For example, when the key performance indicator (maximum accelerator operation amount) acquired when the condition 1 of FIG. 8 is satisfied is equal to or higher than a predetermined value, the score for the key performance indicator is 5 points. On the other hand, when the key performance indicator is less than the predetermined value, the score for the key performance indicator is 100 points.

For example, when the key performance indicator (minimum longitudinal acceleration) acquired when the condition 2 of FIG. 8 is satisfied is less than a predetermined value, the score for the key performance indicator is 5 points. On the other hand, when the key performance indicator is equal to or higher than the predetermined value, the score for the key performance indicator is 100 points.

For example, when the key performance indicator (acceleration of the steering angle) acquired when the condition 3 of FIG. 8 is satisfied is equal to or higher than a predetermined value, the score for the key performance indicator is 5 points. On the other hand, when the key performance indicator is less than the predetermined value, the score for the KPI is 100 points.

The value (average value) obtained by dividing the total score for respective key performance indicators corresponding to the conditions 1 to 3 by the number of items (3) in the category "safety" is the safety score.

For example, when the key performance indicator (average value of jerks) acquired when the condition 4 of FIG. 8 is satisfied is equal to or higher than a predetermined value, the safety score for the key performance indicator is 5 points. On the other hand, when the key performance indicator is less than the predetermined value, the safety score for the key performance indicator is 100 points.

The value (average value) obtained by dividing the total score for the key performance indicators of the category "comfort" by the number of items of the category "comfort" is the comfort score. However, since the number of items in the category "comfort" is "1" in the embodiment, the score regarding the key performance indicator corresponding to the condition 4 is the comfort score.

Further, the score calculator 144 calculates the driving operation score based on the calculated safety score and comfort score. Specifically, the score calculator 144 acquires the driving operation score by using the value (average value) obtained by dividing the total score of the safety score and the comfort score by the sum of the items of the safety score and the comfort score (4).

The second server 14 that has completed the operation of step S12 proceeds to step S13, and the event specifier 145 specifies an event based on the detection value data group stored in the storage of the second server 14.

The second server 14 that has completed the operation of step S13 proceeds to step S14, and the transmission and reception part 141 transmits data about the safety score, the comfort score, the driving operation score, and the specified event to the third server 16 together with the information about the vehicle ID.

The second server 14 that has completed the operation of step S14 proceeds to step S15, and the deleter 146 deletes the detection value data group from the storage of the second server 14.

When the determination in step S10 is negative or when the operation of step S15 is completed, the second server 14 temporarily ends the process of the flowchart of FIG. 10.

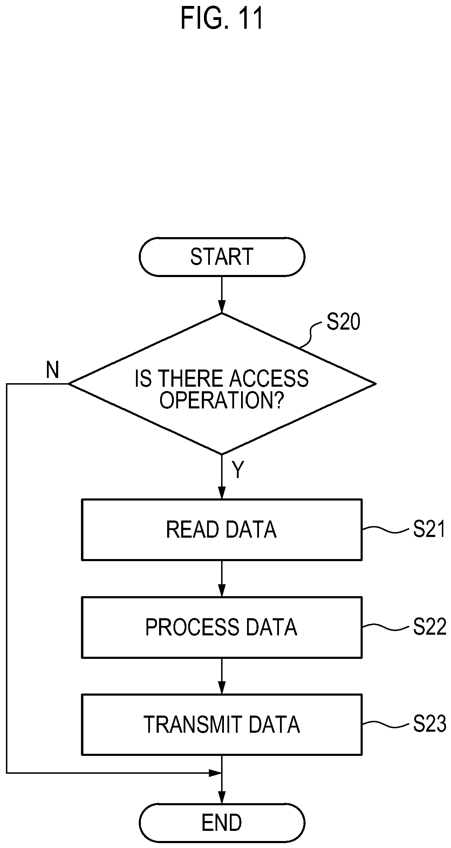

Next, a flow of the process performed by the fourth server 18 will be described with reference to a flowchart of FIG. 11. The fourth server 18 repeatedly executes the process of the flowchart of FIG. 11 every time a predetermined time elapses.

First, in step S20, the transmission and reception controller 181 of the fourth server 18 determines whether or not a display request has been transmitted to the transmission and reception part 19 from the transmission and reception controller 501 (transmission and reception part 52) of the mobile terminal 50 in which the driving diagnosis display application is running. That is, the transmission and reception controller 181 determines whether or not there is an access operation from the mobile terminal 50. The display request includes information about the vehicle ID associated with the mobile terminal 50.

When the determination in step S20 is affirmative, the fourth server 18 proceeds to step S21, and the transmission and reception controller 181 (transmission and reception part 19) communicates with the third server 16. The transmission and reception controller 181 (transmission and reception part 19) receives, from the transmission and reception part 161 of the third server 16, data about the safety score, comfort score, driving operation score, and specified event corresponding to the vehicle ID associated with the mobile terminal 50 transmitting the display request.

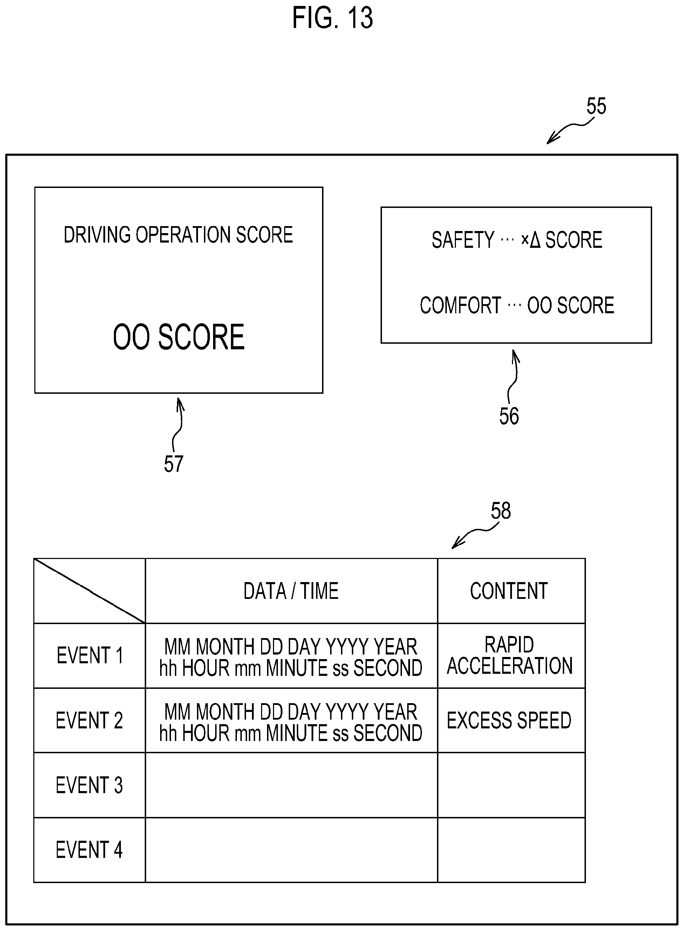

The fourth server 18 that has completed the operation of step S21 proceeds to step S22, and the data generator 182 generates data representing a driving diagnosis result image 55 (see FIG. 13) by using the data received in step S21. The driving diagnosis result image 55 can be displayed on the display 51 of the mobile terminal 50 on which the driving diagnosis display application is running.

The fourth server 18 that has completed the operation of step S22 proceeds to step S23, and the transmission and reception part 19 transmits the data generated by the data generator 182 in step S22 to the transmission and reception controller 501 (transmission and reception part 52) of the mobile terminal 50.

When the determination in step S20 is negative or when the operation of step S23 is completed, the fourth server 18 temporarily ends the process of the flowchart of FIG. 11.

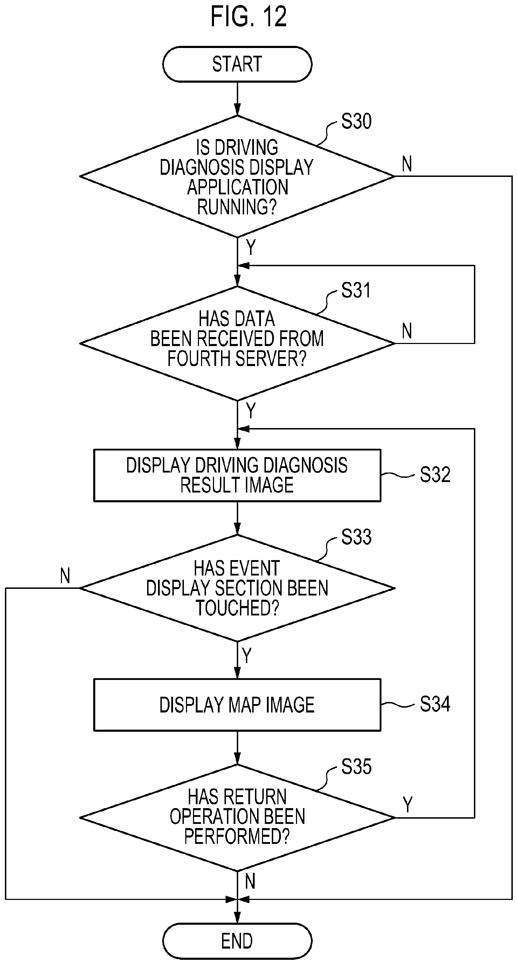

Next, a flow of the process performed by the mobile terminal 50 will be described with reference to a flowchart of FIG. 12. The mobile terminal 50 repeatedly executes the process of the flowchart of FIG. 12 every time a predetermined time elapses.

First, in step S30, the display controller 502 of the mobile terminal 50 determines whether or not the driving diagnosis display application is running.

When the determination in step S30 is affirmative, the mobile terminal 50 proceeds to step S31, and determines whether or not the transmission and reception controller 501 (transmission and reception part 52) has received the data representing the driving diagnosis result image 55 from the transmission and reception part 19 of the fourth server 18.

When the determination in step S31 is affirmative, the mobile terminal 50 proceeds to step S32, and the display controller 502 causes the display 51 to display the driving diagnosis result image 55.

As illustrated in FIG. 13, the driving diagnosis result image 55 has a safety/comfort display section 56, a score display section 57, and an event display section 58. The safety score and a comfort score are displayed on the safety/comfort display section 56. The driving operation score is displayed on the score display section 57. Information about each specified event is displayed on the event display section 58. The information representing each event includes the date and time when the event has occurred and contents of the event.

The mobile terminal 50 that has completed the operation of step S32 proceeds to step S33, and the display controller 502 determines whether or not the hand of the user of the mobile terminal 50 has touched the event display section 58 on the display 51 (touch panel).

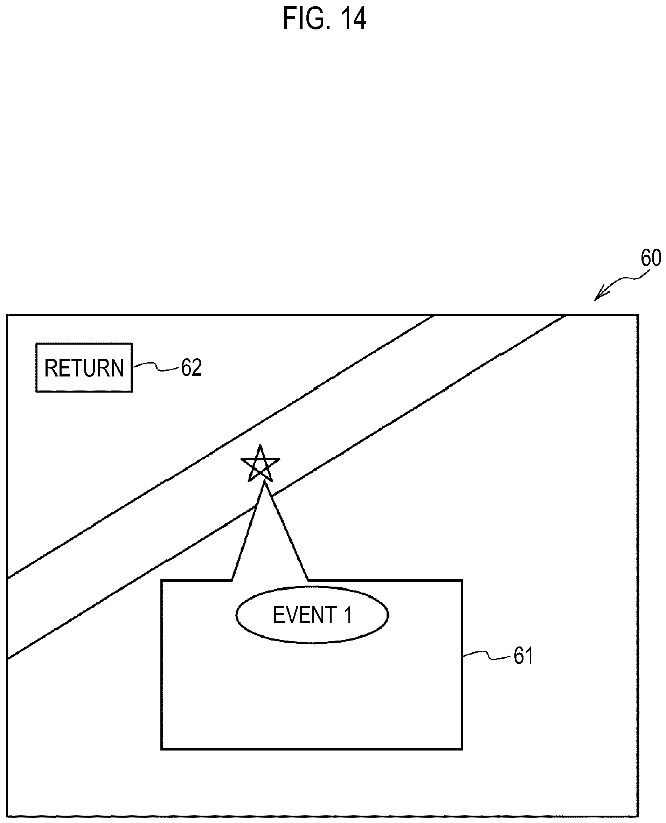

When the determination in step S33 is affirmative, the mobile terminal 50 proceeds to step S34, and the display controller 502 causes the display 51 to display the map image 60 based on the map data illustrated in FIG. 14. Here, it is assumed that the driver touches "event 1" in the event display section 58. In this case, the map image 60 includes the map information of the place where the event 1 has occurred and the surroundings of the place, and the place where the event 1 has occurred is displayed by a star (☆). Further, when the user touches the star mark (☆), an event image 61 represented by image data acquired by the camera 36 within a predetermined time including the time when the event 1 has occurred is displayed. This predetermined time is, for example, ten seconds.

The mobile terminal 50 that has completed the operation of step S34 proceeds to step S35, and the display controller 502 determines whether or not the hand of the user has touched a return operation section 62 on the map image 60. The display controller 502 of the mobile terminal 50, by which the determination in step S35 is affirmative, proceeds to step S32 and causes the display 51 to display the driving diagnosis result image 55.

When the determination in step S30, step S33 or step S35 is negative, the mobile terminal 50 temporarily ends the process of the flowchart of FIG. 12.

As described above, in the driving diagnosis device 10 and the driving diagnosis method of the embodiment, the KPI acquirer 143 calculates the key performance indicator using merely the specific detection value in the detection value data group. Therefore, the calculation load of the KPI acquirer 143 is relatively small compared to the case of calculating the key performance indicator using all of the detection value data group. Therefore, the calculation load of the driving diagnosis device 10 and the driving diagnosis method of the embodiment is relatively small.

Further, the image data included in the data group transmitted from the second server 14 to the third server 16 is merely the image data when the event has occurred. Therefore, the amount of data stored in the storage of the third server 16 is relatively small compared to the case where all the image data recorded in the storage of the second server 14 is transmitted from the second server 14 to the third server 16.

Further, in the driving diagnosis device 10 and the driving diagnosis method of the embodiment, the driving diagnosis is performed by using the driving operation score (key performance indicator) and the event. Therefore, the driver who sees the driving diagnosis result image 55 can recognize the characteristics of the driving operation of the driver himself/herself from a wide range of viewpoints.

Further, in the driving diagnosis device 10 and the driving diagnosis method of the embodiment, the entity B, other than the entity A that manages the first server 12, the second server 14, and the third server 16 and manufactures the vehicle can access the data stored in the third server 16. Therefore, a person (organization) other than the entity A can create an application (driving diagnosis display application) that uses the driving diagnosis result obtained by the driving diagnosis device 10 and the driving diagnosis method of the embodiment. Therefore, the development of the aforementioned application can be promoted.

Although the driving diagnosis device 10 and the driving diagnosis method according to the embodiment have been described above, the design of the driving diagnosis device 10 and the driving diagnosis method can be appropriately changed without departing from the spirit and scope of the invention.

The categories, operation targets, scenes, specific detection values, extraction conditions and key performance indicators shown in FIG. 8 are not limited to those shown in FIG. 8. For example, there may be a plurality of operation targets, scenes, specific detection values, extraction conditions, and key performance indicators in the category "comfort".

The types of events described in FIG. 9 are not limited to those described in FIG. 9. For example, at least one of a sudden steering wheel operation, antilock brake system (ABS) activation, pre-crash safety system (PCS) activation, and collision detection with an obstacle may be specified as an event.

The driving diagnosis device 10 may be implemented by a configuration different from the above. For example, the first server 12, the second server 14, the third server 16, and the fourth server 18 may be provided as one server. In this case, for example, using a hypervisor, the inside of the server may be virtually partitioned into areas corresponding to the first server 12, the second server 14, the third server 16, and the fourth server 18, respectively.

The detector that acquires the detection value data group may be any device as long as the device acquires a physical quantity that changes based on at least one of traveling, steering, and braking of a vehicle, or a physical quantity that changes by operation of a predetermined operating member. For example, the detector may be a sensor for measuring a coolant temperature of the engine, a yaw rate sensor, a shift lever position sensor, or the like. Moreover, the number of detectors may be any number.

The driving diagnosis device 10 may acquire merely one of the driving operation score and the event. In this case, merely one of the driving operation score and the event is stored in the storage of the third server 16.

The method of acquiring (calculating) the key performance indicator and the method of calculating the driving operation score may be different from the above methods. For example, the safety score and the comfort score may be calculated with respective key performance indicators weighted.

The driving diagnosis device 10 does not have to be connected to the Internet. In this case, for example, the detection value data group acquired from the vehicle is recorded on a portable recording medium (for example, USB), and the detection value data group in the recording medium is copied to the first server 12.

The third server 16 may have a function of confirming the access authority when the third server 16 receives an access from the fourth server 18. In this case, the fourth server 18 can receive data about the safety score, the comfort score, the driving operation score, and the specified event from the third server 16, merely when the third server 16 confirms that the fourth server 18 has the access authority.

A certain restriction may be applied to the access by the entity B (fourth server 18) to a part of the data recorded in the storage of the third server 16. For example, information indicating that the data is restricted is added to a part of the data group recorded in the storage of the third server 16. Access by the entity B (fourth server 18) to the data with the information indicating that the data is restricted is suppressed (even when the user has the above access right). The data with the information indicating that the data is restricted is, for example, position information.

Instead of the GPS receiver 37, the vehicle 30 may include a receiver capable of receiving information from satellites of a global navigation satellite system (for example, Galileo) other than GPS.

The mobile terminal 50 may read the map data from the Web server and display the map image on the display 51.

## Claims

1. A driving diagnosis device comprising:
a detection value recorder (12D) configured to acquire and record a detection value detected by a detector (32, 33, 35, 37) provided in a vehicle (30) from a detection value acquirer (38) for acquiring the detection value, the detection value being a physical quantity that changes based on at least one of traveling, steering, and braking of the vehicle (30) or a physical quantity that changes by operation of a predetermined operating member;
an information extractor (142) configured to extract a specific detection value that is the detection value specified, from the detection value recorder (12D);
a key performance indicator acquirer (143) configured to acquire a key performance indicator based on the specific detection value; and
a score calculator (144) configured to calculate a driving operation score based on the key performance indicator.

2. The driving diagnosis device (10) according to claim 1, wherein the detection value acquirer (38) and the detection value recorder (12D) are connected to each other via an internet.

3. The driving diagnosis device (10) according to claim 1 or 2, wherein the key performance indicator includes the specific detection value and a calculation value using the specific detection value.

4. The driving diagnosis device (10) according to any one of claims 1 to 3, wherein the score calculator (144) calculates the driving operation score based on a plurality of the key performance indicators.

5. The driving diagnosis device (10) according to any one of claims 1 to 4, further comprising an event specifier (145) configured to specify an event that is a specific behavior that has occurred in the vehicle (30) based on the detection value.

6. The driving diagnosis device (10) according to claim 5, further comprising a database unit (16) configured to store at least one of the driving operation score and information about the event specified by the event specifier (145) and to be connected to an internet.

7. A driving diagnosis method comprising:
acquiring a detection value detected by a detector (32, 33, 35, 37) provided in a vehicle (30) from a detection value acquirer (38) for acquiring the detection value, the detection value being a physical quantity that changes based on at least one of traveling, steering, and braking of the vehicle (30) or a physical quantity that changes by operation of a predetermined operating member;
extracting a specific detection value that is the detection value specified, from the detection value;
acquiring a key performance indicator based on the extracted specific detection value; and
calculating a driving operation score based on the key performance indicator.
